# EUROPEAN PATENT SPECIFICATION

(11) **EP 3 386 143 B1**
(45) Date of publication and mention of the grant of the patent: **07.07.2021**
(21) Application number: 18166429.3
(22) Date of filing: 09.04.2018
(51) Int. Cl.: H04L 9/08, H04L 9/32

(54) **METHOD AND SYSTEM FOR GENERATING A PRIVATE KEY FOR ENCRYPTED DATA TRANSFER BETWEEN AN ELECTRONIC IDENTITY DOCUMENT AND A TERMINAL**
VERFAHREN UND SYSTEM ZUR ERZEUGUNG EINES PRIVATEN SCHLÜSSELS ZUR VERSCHLÜSSELTEN DATENÜBERTRAGUNG ZWISCHEN EINEM ELEKTRONISCHEN AUSWEISDOKUMENT UND EINEM ENDGERÄT
PROCÉDÉ ET SYSTÈME POUR GÉNÉRER UNE CLÉ PRIVÉE POUR LE TRANSFERT DE DONNÉES CHIFFRÉES ENTRE UN DOCUMENT D'IDENTITÉ ÉLECTRONIQUE ET UN TERMINAL

(30) Priority: 08.04.2017 NL 2018668
(43) Date of publication of application: 10.10.2018
(73) Proprietor: RDW, 2711 ER Zoetermeer (NL)
(72) Inventor: VERHEUL, Eric Robert, 1411 JD Naarden (NL)
(74) Representative: Bartelds, Erik

(56) References cited:
- Bundesamt F?r Sicherheit In Der Informationstechnik: "Advanced Security Mechanisms for Machine Readable Travel Documents and eIDAS Token -", , 26 February 2015 (2015-02-26), XP55405723, Retrieved from the Internet: URL:https://www.bsi.bund.de/SharedDocs/Dow nloads/EN/BSI/Publications/TechGuidelines/ TR03110/BSI_TR-03110_Part-1_V2-2.pdf;jsess ionid=FF42AA8C4919811DCD1B35A930658BE6.2_c id351?__blob=publicationFile&v=1 [retrieved on 2017-09-12]
- Bsi: "Advanced Security Mechanisms for Machine Readable Travel Documents and eIDAS Token - Part 3", , 21 December 2016 (2016-12-21), XP55362609, Retrieved from the Internet: URL:https://www.bsi.bund.de/SharedDocs/Dow nloads/EN/BSI/Publications/TechGuidelines/ TR03110/BSI_TR-03110_Part-3-V2_2.pdf?__blo b=publicationFile [retrieved on 2017-04-06]
- VIJAYAKRISHNAN P ET AL: "Formal security analysis of Australian e-passport implementation", ADVANCES IN ONTOLOGIES, AUSTRALIAN COMPUTER SOCIETY, INC, P.O. BOX 319 DARLINGHURST, NSW 2010 AUSTRALIA, 1 January 2008 (2008-01-01), pages 75-82, XP058164974, ISSN: 1445-1336 ISBN: 978-1-920682-36-1
- Nicolas Buchmann ET AL: "Towards Electronic Identification and Trusted Services for Biometric Authenticated Transactions in the Single Euro Payments Area" In: "RoboCup 2008: RoboCup 2008: Robot Soccer World Cup XII", 1 January 2014 (2014-01-01), Springer International Publishing, Cham 032682, XP55625940, ISSN: 0302-9743 ISBN: 978-3-319-10403-4 vol. 8450, pages 172-190, DOI: 10.1007/978-3-319-06749-0_12,

## Description

### 1 Introduction

The invention relates to a method and system for generating a private key for encrypted data transmission between an electronic identity document, in particular a passport, ID card or driver's license and a terminal. Dutch citizens can access electronic government services through DigiD, a central authentication system. Citizens are redirected by the government service to DigiD where authentication takes place. If this is successful, the user directed back to the government service. Current DigiD is based on a knowledge authentication factor only (userid/password). In 2016 a pilot was concluded supplementing DigiD with a possession factor. This factor consists of a contactless electronic identity document of the user. The user first authenticates to DigiD using userid/password and then lets DigiD remotely read his identity document whereby proving possession. This setup is called *Remote Travel Document Authentication* [18,31]. As the setup is also applicable to other types of documents we refer to *Remote Document Authentication* (RDA). Compare Section 2. For simplicity of exposition, we only refer to electronic passports (simply referred to as passports) compliant with international specifications [10].

The article "Towards Electronic Identification and Trusted Services for Biometric Authenticated Transactions in the Single Euro Payments Area" by N. Buchmann et al., Lecture Notes in Computer Science, vol. 8450, pages 172-190, discloses the personalization of an identitiy document with biometric data, in the context of the PACE and eIDAS protocols and infrastructure.

The standard "Advanced Security Mechanisms for Machine Readable Travel Documents and eIDAS Token" by the German Bundesamt für Sicherheit in der Informationstechnik, Technical Guideline TR-03110, discloses an authentication and key derivation protocol for an electronic identity document.

The article "Formal security analysis of Australian e-passport implementation" by P. Vijayakrishnan et al., Proceedings of the 6th Australian Information Security Conference (AISC 2008), pages 75-82, discusses the security of the Australian standard for electronic passports.

Other identity document types are discussed in Section 7.

The invention has for its object to provide a further development of this RDA which will allow encrypted data transmission between an electronic identity document and a terminal. According to a first aspect of the invention, this is achieved by a method according to independent claim 1.

This method will be referred to in this application as Remote data Encryption (RDE).

In one embodiment of the inventive method, at least prior to step (e)the electronic identity document and the terminal may agree on a set of key extraction parameters, and in step (e) the protected response may be read in accordance with the agreed set of key extraction parameters.

In a further embodiment of the method, the set of key extraction parameters may be agreed upon when the electronic identity document is first read by the reader of the terminal, and the agreed set of key extraction parameters may be used for each subsequent data transmission.

In yet another embodiment, the electronic identity document may signal agreement with encrypted data transmission when it is first read by the reader of the terminal.

In a further embodiment, the protected response may form a cryptogram from which the private key is generated.

In one embodiment the method may further comprise the step of: f1. deriving an extraction PIN from the key extraction parameters.

In this embodiment, the extraction PIN may be used in combination with the private key for encrypting or decrypting data.

In this embodiment a time needed for deciphering the extraction PIN by brute force may be adjusted independently of the PIN. Such adjustment may be achieved by adjusting the steps required for entering and checking the PIN.

In a further embodiment of the inventive method, at least steps (a)-(e) may involve the use of a Chip Authentication (CA) protocol.

In another embodiment of the method, at least steps (c) and (d) may involve the use of a Diffie-Hellman key exchange protocol.

In yet another embodiment, the method of the invention may also be used for authentication of the electronic identity document and/or its holder.

In that embodiment the document holder may enter data for use in the authentication process manually.

The invention also relates to a system according to independent claim 10.

The invention is further illustrated in the following detailed description, in which reference is made to the drawings, in which:
Fig. 1 shows a metaphor for the operation of RDE;
Fig. 2 shows an electronic identity document (e-passport) and a terminal (reader) of an embodiment of the system of the invention;
Fig. 3 shows the basic steps of encryption and decryption using the Remote Data Encryption method of the invention;
Fig. 4 shows protected command ADPU formation;
Fig. 5 shows protected response ADPU formation;
Fig. 6 is a generalized representation of encryption and decryption in accordance with the so-called RDE₁ method;
Fig. 7 shows a generalized representation of a two factor encryption and decryption method identified as RDE₂;
Fig. 8 shows a version 16 QR code capable of encoding 586 bytes of information;
Fig. 9 shows the arrangement of information in a version 11 QR code that is capable of encoding 321 bytes of information;
Fig. 10 shows the version 11 QR code; and
Fig. 11 shows the keys for the electronic identity document and the terminal for regular Chip Authentication (left hand side) and for RDE in accordance with the invention (right hand side).

In RDA one effectively uses an electronic passport as a PKI smartcard to authenticate its holder to an external party. Typically PKI smartcards also contain an encryption certificate allowing external parties to encrypt data for the user. The applicant posed the question if a similar functionality could be provided by a passport. In other words: can an external party extract a public key from a passport allowing data encryption that can only be decrypted by the holder? We refer to this ability as *Remote Document Encryption* (RDE). Note that we require that RDE is based on existing passport protocols. The feasibility of RDE is not only academically interesting but also practically. We discuss four practically relevant use cases but we think many more exist:
**Secure Messagebox** Governments are replacing paper letters with electronic messages made available to the user through a central facility. This facility is a hotspot, i.e. an accumulation of user personal data. RDE allows compartmentalization where various governmental organizations use the passport of a user to encrypt data for him. In this way the central facility is no longer a hotspot.

**Medical Portal Compartmentalization** Health care providers are giving patients electronic access to their medical records. For convenience medical portals are used allowing to perform both non-sensitive (e.g. making appointments) as sensitive functions (access to medical records). Typically access is given to medical records of all departments the patient has consulted within the health care provider. RDE allows portal compartmentalization.

**Secure data storage on NFC devices** It is not good practice to locally store sensitive data in mobile applications (APPs) as these could compromise when the device is lost. This means sensitive data can only reside at server side and needs to be recollected when required. This can result in slow perceived APPs . The mobile data usage can also be costly. With RDE one can locally secure data. This is particularity interesting for Near Field Communication (NFC) enabled devices where passports can be directly read.

**Cloud encryption** A natural extension to the previous use case is to let a user connect a contactless card reader to a PC. The user can then RDE encrypt all its sensitive data and place it in the cloud. Only with the passport the data is decipherable again. In this setting users only need to (physically) protect their passport and no longer worry about cloud security.

The applicant's idea was to base RDE on the passport AA protocol on which RDA is also based. That is, the AA public key would play the role of the RDE public key. Specifically, if AA would be based on text-book RSA [19] one could base RDE on 'forged' signatures. Here a party can generate challenges enabling prediction of the signature. The data would then be encrypted with the signature and the encrypted data would accompanied with the challenge. The passport holder would then be able to calculate the signature based on the challenge and decrypt the data. However, AA is not based on text-book RSA but is based on ISO/IEC 9796-2, Digital Signature scheme 1 [15]. Here the AA challenge is hashed by the passport and concatenated with a large random number generated by the document. This means it is not possible to predict signatures. Actually, many countries are no longer using AA based on RSA signature schemes but are replacing this with Elliptic Curve Cryptography (ECC) based signatures, i.e. EC-DSA [24]. Here signature forgery is also precluded.

### Outline of the paper

In this paper we show how RDE can be based on the Chip Authentication protocol. Basic e-passport protocols and RDA are first discussed in Section 2. In Section 3 we first present an RDE implementation metaphor and then discuss the Chip Authentication protocol on which RDE is based. A basic version of RDE is specified in Section 4. In this version, denoted by RDE₁, decryption is solely based on possession of the passport, i.e. is single factor. In Section 5 a two factor version of RDE is specified denoted by RDE₂. Here basic RDE is supplemented with a knowledge factor (RDE PIN), which is bound to the passport. In Section 6 we specify how two factor RDE can be uses as a two factor means of authentication also supporting "dynamic linking". In Section 7 we mention some RDE variations and extensions to identity cards and electronic driver licenses. Finally, Section 8 contains conclusions. Finally, in the appendix we provide results of our RDE experiments based on an e-passport simulator, a Dutch e-passport and a Dutch identity card.

### 2 Basic passport protocols and RDA

Like most card protocols, passport protocols distinguish the card and a party wanting to read data from it, usually called the *terminal.* The terminal sends commands including parameters to the card called application protocol data units or APDUs to which the card responses and whereby certain states inside the card can change. Compare [14]. RDA [18] is based on three basic passport protocols BAC, PA and AA [12] we now briefly explain. All personal data printed on a passport is also electronically available. By the contactless nature of pass- ports it needs to be avoided that this data can be surreptitiously read. To this end, access to the passport data is protected by *Basic Access Control* (BAC). In essence, the terminal needs to prove knowledge of a password. This BAC password takes the form of a so-called *Machine Readable Zone* (MRZ) a long string printed on the passport. As the name indicates, the MRZ is typically scanned by a computer facilitating electronic reading of electronic passports, e.g. in border control. Actually, only parts of the MRZ are actually used as a password, namely: the document number, the expiry date of the document and the date of birth of the holder. In BAC the passport generates a random number that needs to be encrypted by the terminal with a cryptographic key derived from the MRZ. Only when this encryption is correct, the passport will give the terminal access to its data. Actually, the BAC protocol not only ensures access control but also provides secure messaging protecting the communication against eavesdropping. This allows the terminal to protect the commands including the parameters and the responses. This secure messaging is based on two cryptographic keys, one for confidentiality and one for authenticity. These keys are based on the MRZ and random numbers generated by the card and the reader. With these keys, the terminal encrypts the command (APDU) and parameters, calculates a message authentication code on the result and wrapped these in a secure messaging object. The card does a similar thing with the response. In [12, Appendix D-4] an worked out example of this is provided which is very illustrative. From now on we refer to the *protected command* and *protected response* in this context.

Data on a passport takes the form of (elementary) files on the document called data groups. These *data groups* are both individually and collectively signed by the government that issued the document. This is called *Passive Authentication* (PA). For PA a passport contains a file called the *Document Security Object,* also known as EF.SO_{D}. The document security object contains a digital signature of the issuer and the public part of the key that was used. This public key is wrapped in a certificate issued from a published government Public Key Infrastructure. The signature is placed on the concatenation of the hashes of all data groups. Validation of a data group comprises of checking the concatenated hashes signature and checking that the hash of the data group is present in the document security object.

With PA one cannot only validate the authenticity of an individual data group but also that all data groups correspond to the same passport. As these data groups and signatures can be copied, passports can also prove their authenticity. This is called *Active Authentication* and works as follows. One data group (data group 15) contains an *Active Authentication* public key. The corresponding private key is securely placed in the passport. A party reading the passport can validate is authenticity by generating a (8 byte) random number and letting this be signed by the passport with its AA private key. The party can validate the signature and the authenticity of the public key through PA.

In Protocol 1 we have given a basic description of RDA [18] of which many variants exist. The interlinking between the various steps is typically based on the Security Assertion Markup Language (SAML) protocol [30]. Clearly, if the userid/password authentication in Step 3 fails one typically would allow the user to re-enter the userid/password for a limited number of times. The MRZ in Step 4 does not need to be provided to DigiD at each authentication but could be stored by DigiD, e.g. as part of a registration process. If Step 5 is successful the commands including parameters and responses in Steps 6 and 9 are protected. One can also use another protocol controlling access to the passport in Step 5. This protocol is called Password Authenticated Connection Establishment (PACE)[12]. In essence, PACE is based on the establishment of a secure messaging tunnel based on an (anonymous) Diffie-Hellman key exchange based on the MRZ data. If a reader does not use the correct MRZ data, the tunnel will not be established and the passport data cannot be read. PACE is more secure than BAC as it is more resistant to MRZ brute-forcing. In Step 9 of the RDA protocol one can also incorporate a message, e.g. by letting the random number be based as the hash of a message and a random number. In this way, unrefutable proof exists that the user, or rather its passport, was present during the authentication and consented to the message. Actually, this property is the reason that German passports do not support the AA protocol as it could be abused. Compare [12, Appendix C].

### Protocol 1 Remote Documentation Authentication

1: A service provider requests a user to authenticate.
2: The user is redirected to DigiD.
3: The user authenticates at DigiD with userid/password. If authentication is unsuccessful RDA fails.
4: The user allows DigiD access to its passport through middleware, i.e. the passport application is selected.
5: The user allows DigiD to read his passport by giving the MRZ. If unsuccessful RDA fails, otherwise secure messaging is established.
6: DigiD reads data group 1 (Identity Information), data group 15 (AA public key) and the Document Security Object (EF.SOD).
7: DigiD validates the authenticity of the data groups read and that they belong to each other (PA). If unsuccessful, RDA fails.
8: If the identification data from steps 3 and 6 do not match, RDA fails.
9: DigiD generates a random number and lets the passport sign this with its AA private key (AA).
10: DigiD validates the signature. If this is incorrect, RDA fails.
11: RDA is successful and the user is redirected to service provider accompanied with relevant personal data, e.g. the BSN.

Alternatively, one can use the Chip Authentication (CA) protocol which, similar to the PACE protocol, is based on the Diffie-Hellman key exchange protocol. With the CA protocol the reader can validate the authenticity of the passport but in a non-transferable way. That is, a transcript of a CA execution cannot be used to other people as a proof that the user's passport was present. This is due to the property that anyone can construct such CA transcripts. Actually the CA protocol has an even stronger property which forms the basis for our Remote Document Encryption setup as we show in the next section.

### 3 RDE through chip authentication

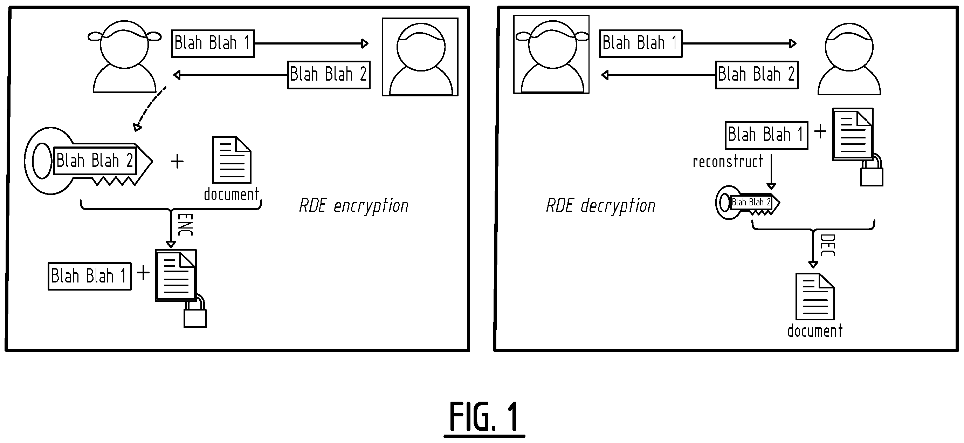

Consider two people, Alice and Bob, having regular conversations. Alice knows Bob so well, that she knows at forehand the responses of Bob of any statement she makes. Alice can then encrypt messages for Bob as follows (cf. Figure 1):
1. Alice generates a random statement and predicts the response of Bob.
2. Alice uses the response as a key to encrypt a message for Bob.
3. Alice sends the encrypted message to Bob plus her statement.

On receipt of the encrypted message and Alice's statement, Bob can then decrypt the message as follows:
1. Bob forms its response to the statement of Alice.
2. Bob uses the response to decrypt the encrypted message.

To make this setup secure, it is vital that only Alice can predict Bob's responses.

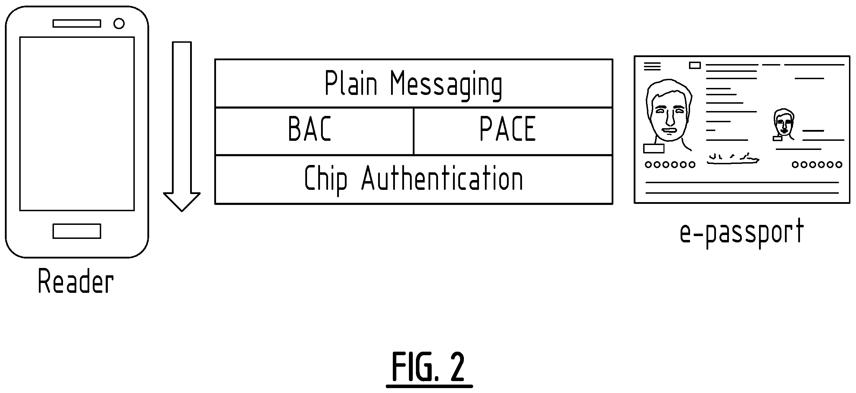

As in the metaphor, we let a party use a predicted response of the holder's passport as an encryption key for a message. To make the responses only predict- able for the party (and the user) we base RDE on the *secure messaging* mechanisms of passports. Information between a passport and a reader is exchanged radiographically and secure messaging protects against attacks like eavesdropping. More in particular, secure messaging protects the confidentiality and authenticity of exchanged information. Within the context of passports three types of secure messaging exist: BAC, PACE, and CA. As as indicated in Figure 2, CA and its secure messaging can only be established after a successful execution of either the BAC or PACE protocol. After a successful execution of the CA protocol, BAC/PACE secure messaging is *replaced* by CA secure messaging. Moreover, the establishment of CA secure messaging is independent of the BAC/PACE tunnel. In other words, for the description of CA messaging we effectively do not have to consider BAC/PAC. For completeness we have also mentioned the Terminal Authentication (TA) protocol. With this protocol, the terminal can prove its authenticity to the passport similar to the AA protocol. This is required before sensitive data groups (biometrics) can be read. TA is mentioned as "Extended Access Control to Additional Biometrics" in the ICAO specification [12] but is not further specified. In practice, the TA protocol specified in [1] is used. TA retains secure messaging from CA, i.e. does not introduce additional secure messaging.

The CA protocol works as follows. Similar to the AA setup the CA setup also contains a public key stored in a passport data group (data group 14, cf. [12]).

This data group is also signed by the publisher through passive authentication. The CA private key is securely stored in the document chip. In contrast to the AA setup, the CA public key is not a digital signature key but a so-called Diffie-Hellman key, cf. [19]. The CA protocol is based on an additive group (<G>, +) of order q generated by an element G; these are called *domain parameters.* The CA public key Y on a passport takes the form xG where x ∈_{R} (0, q) is the CA private key. We use additive notation as this is customary in the context of elliptic curve groups which are now commonly used in CA. As an illustration, all active Dutch passports (and identity cards) are equipped with an elliptic curve CA key. Prior to 9 March 2014, Dutch passports used the 256 bit brainpoolP256r1 curve and after this date the 320 bit brainpoolP320r1 curve is used. In the context of elliptic curve groups we let GF(ₚ) denote the finite field over which the curve is defined. The regular mathematical representation of a point on an elliptic curve is (x, y) where 0 ≤ *x, y* < *p* satisfying a certain (Weierstrass) equation. Compare [9]. A point on an elliptic curve can be represented in *uncompressed* form as an octet string of length 2*m.* Here *m* denotes the size in octets of p. Actually, the coding in [4] adds an extra octet resulting in 2*m* + 1 octets. One can also encode a point in compressed form representing the full x coordinate and the parity of the y coordinate. See [4] where in compressed form an elliptic curve point is represented with *m* + 1 octets. In the case of brainpoolP320r1 (respectively brainpoolP256r1) this *m* equals 40(respectively 32).

Data group 14 also contains the symmetric cryptographic algorithms supported in CA secure messaging. This encompasses an encryption algorithm and a message authentication (cryptographic checksum) algorithm. Secure messaging is based on encrypt-then-authenticate mode, i.e. data is padded, encrypted and afterwards the formatted encrypted data is input to the authentication calculation. Currently, cf. [12], four combinations are specified:
**id-CA-DH-3DES-CBC-CBC** This uses two key 3DES [21] in Cipher Block Chaining (CBC) mode for both encryption and authentication (112 bit security).
**id-CA-DH-AES-CBC-CMAC-128** This uses 128 bit AES [23] in Cipher Block Chaining (CBC) mode for encryption and in CMAC mode for authentication (128 bit security).
**id-CA-DH-AES-CBC-CMAC-192** This uses 192 bit AES [23] in Cipher Block Chaining (CBC) mode for encryption and in CMAC mode for authentication (192 bit security).
**id-CA-DH-AES-CBC-CMAC-256** This uses 256 bit AES [23] in Cipher Block Chaining (CBC) mode for encryption and in CMAC mode for authentication (256 bit security).

Although in principle a passport might support multiple algorithms, in practice a passport only supports one. In Protocol 2 we have given a description based on [12] of how a party (terminal) can run the CA protocol. The terminal can only conclude a CA execution is successful, if it successfully read a file on the document over the established secure messaging. This is why the protocol 2 also contains a file identifier F_{Id} and a (non-zero) number of bytes to be read. There exist two methods to read a file on a passport (cf. [11, Section 3.9.3]): by selecting the file and then reading the data, or by reading the data directly using a so-called short file identifier. The first method uses two commands. Compare [14]. The second method only uses one such command called READ BINARY with Short File Identifier which we denote by RBs. The second method is recommended by [11] and is also convenient in RDE context as is uses no "data". Compare Section 4.2. For these reasons we have have based Protocol 2 below on RBs.

### Protocol 2 CA protocol and reading n bytes from file FId with command RBs.

### [We assume the terminal has successfully setup a BAC/PACE channel.]

1: The terminal reads data group 14 (CA public key Y , domain parameters and encryption algorithms to use) from the passport.
2: The terminal validates the authenticity of the data group through passive authentication. If this fails, CA fails.
3: The terminal generates an *ephemeral* Diffie-Hellman key pair, i.e. generates a (pseudo) random number *k* ∈ (0, *q*) and forms the ephemeral public key *Z* = *kG.* This is sent to the passport.
4: Both parties compute the shared Diffie-Hellman secret *K.* The card calculates this as *K* = *xZ,* the terminal as *K* = *kY*. Both parties derive two session keys KS_{Enc} and KS_{MAC} from their view of *K.*
5: On these keys, CA secure messaging is based, encryption is based on key KS_{Enc} and authentication on key KS_{MAC}.
6: The terminal sends the protected command RBₛ to read *n* bytes from file *F*_{Id} resulting in a protected response *M*, i.e. ciphertext.
7: If cryptographic processing (authentication validation, decryption) on *M̅* fails, CA fails otherwise CA is successfully executed.

Successful secure messaging (Steps 6,7) is a guarantee that the two views of K in Step 4 coincide and that the passport is authentic. In normal practice a terminal application never uses the protected *M̅*but sees the actual plaintext bytes read from the file and a successful return status. The following proposition is the basis for the working of our RDE implementation; we let Iql denote the size in bits of the CA group order.

**Proposition 3.1** *The protected messages RBₛ and M̅ in Step 6 of Protocol 2 are deterministically based on the ephemeral key Z from Step 3, the file F_{Id} read and the actual contents read. That is, if the terminal executes Protocol 2 twice with the same ephemeral key Z and the same parameters (n, F_{Id}*), *then RBₛ and M would also be the same.*

**Proof:** We only discuss M̅ as results on RBₛ follow similarly. The proof of the first part of the proposition follows from an analysis of the CA secure messaging setup in [12]. If follows from [12, Section 9.7] that the derived keys KS_{Enc} and KS_{MAC} are deterministically based on K only. Moreover, K is deterministically based on the ephemeral key Z and the private CA key of the passport. Secure messages either contain commands from the terminal to the card, or responses from the card. It follows from [12, Section 9.8] that protected messages contain an encrypted message and a "cryptographic checksum". The message to be encrypted (card command or response) is first padded in a deterministic fashion ([16, "Padding Method 2"]) and then encrypted with KS_{Enc}. It follows that the encrypted messages deterministically follow from the plain input (card command or response) and KS_{Enc} (and hence Z). If also follows from [12, Section 9.8] that the cryptographic checksum is a message authentication code based on KS_{MAC} on the encrypted message and a so-called send sequence counter (SSC). This SSC starts with value zero and is increased with each command and response. That is, the read command of Step 7 of Protocol 2, first uses SSC value 1 is used and the card response uses SSC value 2 etcetera. It follows that the crypto- graphic checksums also deterministically follows from K, the plain input (card command or response) and SSC, i.e. the number of the protected message.

The previous results implies that the protected response Min Protocol 2 is a function of *n,* F_{Id} and the (pseudo)random *k,* which we represent by *M̅*(., ., .). That is, *M̅*= *M̅*(*n,* F_{Id}, *k*). Similarly we specify a function RBₛ (*n,* F_{Id}, *k*). We remark that it is crucial that in CA messaging the send sequence counter (SSC) starts with one and is not randomly set. The latter is the case in BAC messaging when based on 3DES, cf. [12, Section 9.8.6.3]. As CA messaging completely replaces BAC messaging this is of no consequence. In addition to the analysis of the passport specification [12] we also successfully tested the first part of Proposition 3.1 using the Smart Card Shell and the Smart Card Shell Script Collection [5]. Our tests were based on the passport simulator in the collection and on a Dutch passport. In the simulation the test was performed with 3DES and 128 bit AES. The CA protocol of the Dutch passport was based on the Brainpool320r1 curve and 256 bit AES secure messaging. In the appendix we have provided results from the simulator tests. The following assumption is the basis for the security of our RDE implementation. **Assumption 3.2** *Let n, F_{Id} be fixed. Then the functions k* → *RBₛ*(*n, F_{Id}, k*) *and k* → *M̅ (n, F_{Id}, k) are key derivation functions sensu [29] of security strength at least MIN(128,* |*q*|/*2) bits for DES based secure messaging and MIN(192,* |*q*|/*2) bits for AES.*

Effectively this assumption states that the ICAO secure messaging mechanism [12] is sound: to break the mechanism an attacker is forced to either find the ephemeral Diffie-Hellman private key *k* or to brute force KS_{Enc} and/or KS_{MAC}. Eavesdropping on communication between terminal and passport and partial plaintext knowledge should not help an attacker effectively to extract plaintext from new secure messages or in predicting them.

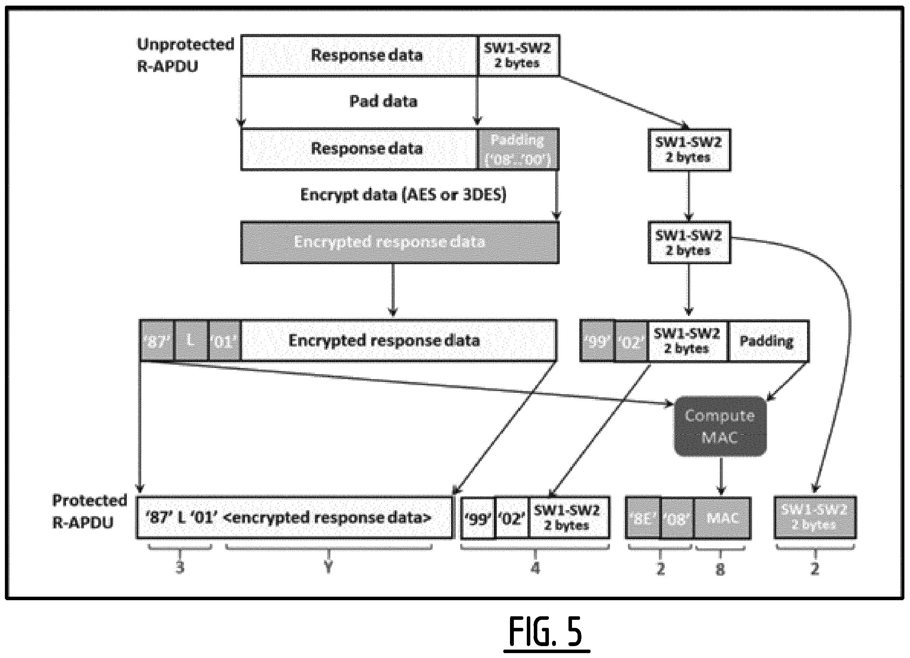

This assumption can be further quantified by inspecting the secure messaging setup used in passports, cf. [12, Figure 5]. A protected message consists of at least one full encryption block based on KS_{Enc} and of a 64 bit message authentication code over the encrypted payload based on KS_{MAC}. It is reasonable to assume that each such cryptogram behave as the output of a key derivation function sensu [29] based on the encryption key used. Actually, [29] specifies key derivation functions in such fashion. In case of DES based messaging the encryption block is of size 64 bits and in case of AES this is of size 128 bits. So the total length is at least 128 bits in case of DES based messaging and at least 192 bits in case of AES. Both encryptions keys KS_{Enc} and KS_{MAC} are derived from the shared Diffie-Hellman key based on *k.* The final motivation for the assumption is that the total security strength of the considered function is upper bounded by the security strength of the CA protocol which is |q|/2 bits, cf. [19].

### 4 Specification of RDE₁ (single factor RDE)

### 4.1 Description of RDE₁

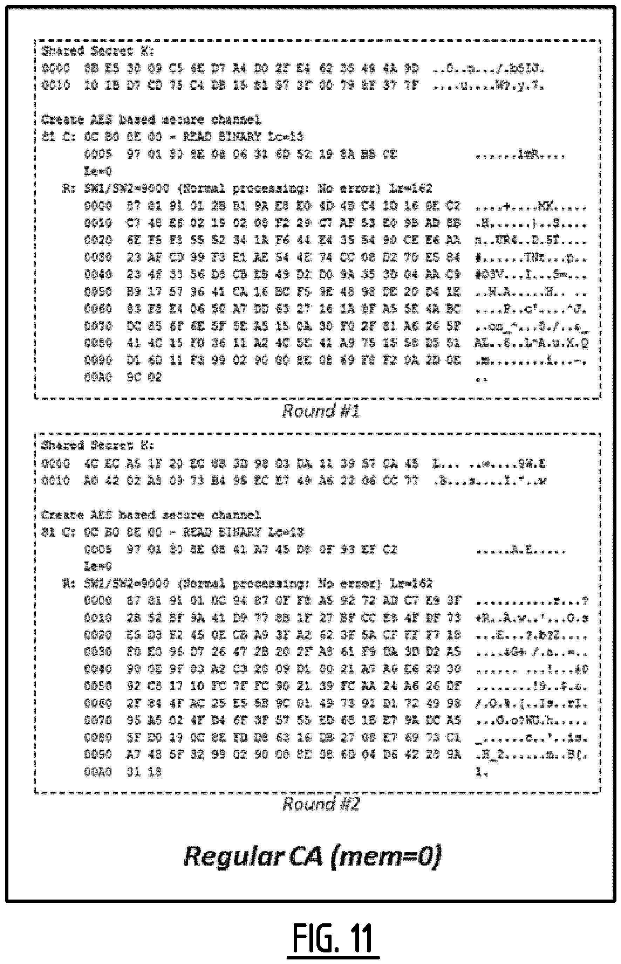

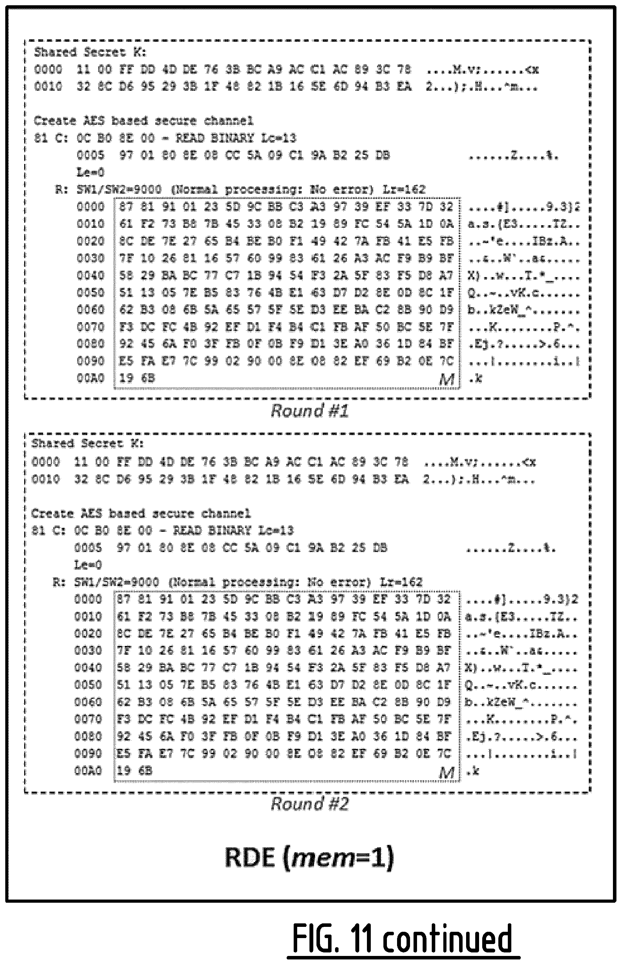

Based on the discussions in Section 3 we can now specify a basic RDE version denoted by RDE₁. In RDE₁ decryption is based on possession of the passport only, i.e. is only based on the single factor of possession. Section 5 discusses RDE₂, a two factor version of RDE whereby incorporating an RDE PIN. The basic idea is use the protected response *M̅* from Protocol 2, i.e. a cryptogram, to derive an encryption key from. A party can compute *M* by simulation and the passport holder can use its passport to compute *M̅.* Compare Figure 11 from the appendix: the first rounds corresponds with the party and the second round with the user.

RDE consists of three use cases: passport holder registration at a party, data encryption by the party and decryption of the data by the holder using his passport. These uses cases are specified in Protocols 3, 4 and 5 respectively. These protocols are examples; some steps can be done in different order too. In these protocols we introduce the notion *RDE key extraction parameters.* This is a triple (*n, F_{Id}, F_{Cont}*) where the first two elements are from Protocol 2. We let F_{Id} be a PA protected data group and we let F_{Cont} represent the full contents of it. In practice it is convenient to let F_{Id} simply be data group 14, i.e. the data group holding the CA public key.

### Protocol 3 Basic Remote Document Encryption passport registration

1: A passport holder authenticates to a party wanting to use RDE. If authentication fails, RDE registration fails.
2: The holder provides the party with data group 1 (Identity Information), data group 14 (CA public key and parameters) and the Document Security Object (EF.SO_{D}) from its passport *P* .
3: The party validates consistency of the information given in Steps 1 and 2. The authenticity of the information provided in Step 2 is validated through passive authentication. If either validation is unsuccessful, RDE registration fails.
4: The holder and the party agree on RDE key extraction parameters (*n, F_{Id}*, *F_{Cont}*). Here the party validates the authenticity of *F_{Cont}* through passive authentication using EF.SO_{D} from Step 2.
5: The holder gives his consent to the party for the usage of RDE to encrypt (confidential) information. If consent is not given, RDE registration fails.
6: The holder is registered at the party for the usage of RDE.

Certainly the first two steps of RDE registration could be based on, and in fact combined with, RDA. As indicated earlier, for convenience one can let data group 14 also take the role of file FId. In the next protocol we specify how the party can encrypt for the passport holder with the registered data. Here K(.) represents a key derivation function, e.g. a hash function, e.g. SHA-256 [22]. We let E_{K} (.) represent an symmetric encryption operation, e.g. AES [23].

### Protocol 4 RDE₁(D, P, H)

### Basic Remote Document Encryption of data D for a passport P of holder H

1: The party looks up the passport CA public key of the holder and the registered RDE key extraction method (*n, F_{Id}, F_{Cont}*).
2: The party generates a ephemeral Diffie-Hellman key pair and uses this together with the CA public key to calculate session keys KS_{Enc} and KS_{MAC} from CA secure messaging.
3: The party simulates reading the holder's passport in line with extraction method (*n, F_{Id}, F_{Cont}*) resulting in a protected READ BINARY command RBₛ and protected response *M*.
4: The party uses the protected response *M̅* as the output of the key derivation function K(*M̅*) to encrypt data *D*, i.e. forms C = _{EK(*M̅*)}(D).
5: The party provides the ephemeral public key Z, RBₛ and *C* to the holder. In the next protocol we specify how the holder can decrypt the encrypted data C by using his passport.

### Protocol 5 RDD₁(Z, RBₛ, C)

### Basic Remote Document Decryption of Z, RBₛ, C by passport holder H

1: The holder uses Z this together with his passport to start CA secure messaging.
2: The holder sends the protected READ BINARY command RBₛ to his passport, resulting in protected response *M̅*.

### 3: The holder uses the key K(M̅) derived from M to decrypt C.

We make some comments on Protocols 5 and 4. RDE security follows from Assumption 3.2. That the protected READ BINARY command RBₛ will not help an attacker to predict the protected response *M̅,* is closely related to soundness of ICAO secure messaging [12]. It is best to base EK (.) on an authenticated form of encryption, e.g. AES based on CCM [27]. By doing so the holder has assurance the RDE decryption process was conducted correctly. One can omit the second step (authentication) in Protocol 3, but this introduces the risk that a fraudster uses a stolen passport to register the holder and gets access to confidential information. This can be mitigated by adding holder authentication in

Step 5 of Protocol 4. In the Secure Messagebox and Medical Portal Compartmentalization use cases from Section 1 one can have holder authentication in both Protocols 3 and 4. We have experimented with RDE on an AES-256 based Dutch passport (issued June 2015, based on Brainpool320r1/AES-256) and a Dutch identity card (issued July 2010, based on Brainpool256r1/3DES). In the first case one achieves 160 bit security and in the second 128 bit, cf. Assumption 3.2. In both cases the RDE decryption execution time on the passport/card was around 1 second.

### 4.2 Implementation of RDE₁

A basic RDE encrypted message consists of two components:
1. the RDE *header* consisting of an header identifier HID, an ephemeral public key Z and secured READ BINARY with Short File Identifier command RBs protected based on Z,
2. the RDE *payload,* i.e. the actual message encrypted with a key K(*M̅*) derived from the secured response *M̅* corresponding to RBₛ.

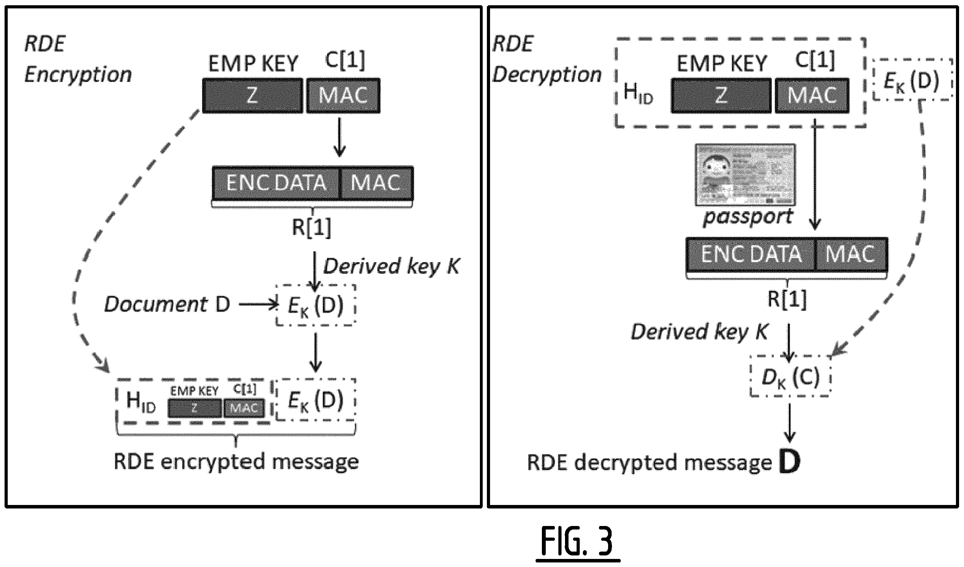

Compare Figure 3 below in which we have colored the payload green and the header red.

We explain the depicted form of the RDE header and estimate it size in bytes. The header identifier allows RDE decryption software to parse the RDE encrypted message, it also implicitly defines the various RDE parameters chosen, such as the curve used (domain parameters) and the RBs chosen (see below). For this a few bytes, say four, suffice. In the context of the brainpoolP320r1 (respectively brainpoolP256r1) the ephemeral public key Z requires 81 (respectively 65) bytes in uncompressed and 41 (respectively 33) bytes in compressed encoding. As we can assume that the RDE decryption software is able to perform a decompression operation, cf. [1], the ephemeral public key Z takes at most 41 bytes.

A plaintext READ BINARY with a Short File Identifier command, i.e. RBs, takes the form as indicated in the table below, cf. [11].

**Table 1: The RBₛ command**

| CLA | INS | P1 | P2 | Lc | Data | Le |
|---|---|---|---|---|---|---|
| 0x00 | 0xB0 | SFI | Offset | - | - | MaxRet |

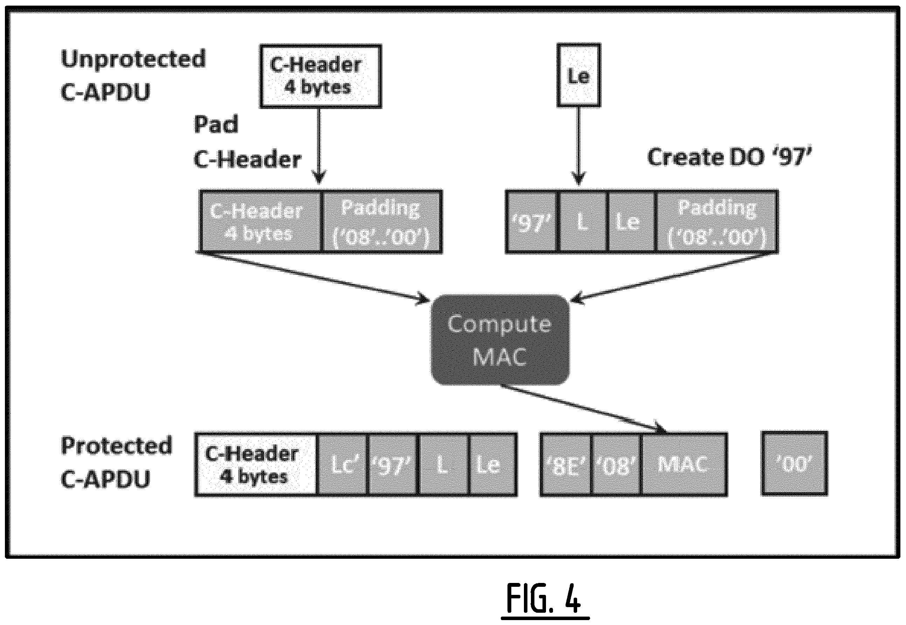

We next estimate the size of RBₛ. To this end, Figure 4 below, based on [3, Annex E], indicates the secured form of command without data such as RBₛ.

It follows that a secured RBₛ does not uses data which also implies that the secured command does not contain encrypted data. All components of the secured command, except the MAC value, are predictable and can be indicated in the RDE header identifier. We conclude that RBₛ can be represented by 8 bytes only. We therefore conclude that a complete RDE header consists of 4 + 41 + 8 = 53 bytes in case the brainpoolP320r1 curve, or in fact any 320 bit curve, is used. In case a 256 bit curve (brainpoolP256r1) is used, the RDE header consists of 4 + 33 + 8 = 45 bytes.

We can also determine convenient RDE choices for the parameters in Table 1. Here, as before, SFI is the Short File Indicator. As observed earlier in RDE can conveniently be chosen as 0x0D corresponding to data group 14 holding the Chip Authentication public key. This data group is required in RDE anyway. The "Offset" is a byte indicating the file position one wants to start reading from. "MaxRet" consists of either one or three bytes, indicating the number of bytes one want to read from the offset. Using an MaxRet longer than one byte indicates one assumes extended length which is not necessarily supported by a passport. So in RDE one can best use a one byte sized MaxRet. For flexibility in RDE applications it is best to maximize the size of the secure response M from the passport in Steps 2 of Protocol 5. For this it is best to choose offset equal to zero (0x00) and MaxRet as large as possible.

However, choosing MaxRet equal to 255, the maximal number fitting in a byte, is not appropriate. This is due to the fact that a secured message introduces overhead and the whole secured message should fit in 255 bytes. One can easily calculate that the maximal size of MaxRet is 223. This calculation is indicated in Figure 5 below, based on [3, Annex E] in which we indicated sizes in bytes. This figure is the counterpart of Figure 4. As the total response should not exceed 255 bytes implying that the maximal sized encrypted payload Y satisfies 3 + Y + 4 + 2 + 8 + 2 = 255. That is, Y is maximally equal to 224. As AES encryption uses "Padding Method 2" from ISO/IEC 9797-1 [16], the minimal padding added to the plaintext is equal to the byte 0x80. This implies that the (plaintext) response data is of maximal size 224 - 1 = 223.

We conclude that a convenient READ BINARY using SFI command is based on the parameters indicated in the table below.

**Table 2: Convenient RDE parameters in the RBs command**

| CLA | INS | P1 | P2 | Lc | Data | Le |
|---|---|---|---|---|---|---|
| 0x00 | 0xB0 | 0x0D | 0x00 | - | - | 0xE9 |

So far we have only used one protected READ BINARY using SFI command to base an RDE encryption key on. Alternatively, one could use a few of such commands and base the encryption key on all secure responses. By using *r* read commands of, for instance, the first 10 bytes of data group 14, the *i*-th security response would contain a 64-bit authenticator also based on send sequence counter 2, 4, ..., 2 · *r.* In this way the encryption key closely resembles the NIST key derivation function "KDF in Counter Mode" [29, Section 5.1]. Note that one would then need r protected READ BINARY commands corresponding to send sequence counter 1, 2, ..., 2 · *r* - 1. Each such command would effectively only consist of a MAC value of 8 bytes. That is, in total the first two components of the basic RDE encrypted message would consist of 41 + *r ·* 8 bytes. In this context a basic RDE encrypted message would consist of the following three components:
1. the RDE *header* consisting of an header identifier, an ephemeral public key Z and a chain of protected READ BINARY commands RBₛ(*i*) for *i* = 1, 2, ..., *r* based on Z,
2. the RDE *payload,* i.e. the message encrypted with a key derived from the secured responses corresponding to the RBₛ(*i*).

More generally, one can also use other commands as part of RDE than the READ BINARY using SFI command. For the basic RDE scheme this does not seem to have any benefits. However, we explain this as it does have benefits in the context of two factor RDE and RDE based authentication we discuss in Sections 5 6 respectively. In this context a basic RDE encrypted message would consist of the following components:
1. the *RDE header* consisting of an header identifier, an ephemeral public key Z and a chain of protected commands C(*i*) for *i* = 1, 2, ... , r protected based on Z,
2. the *RDE payload,* i.e. the actual message encrypted with a key derived from the secured responses corresponding to the C(*i*).

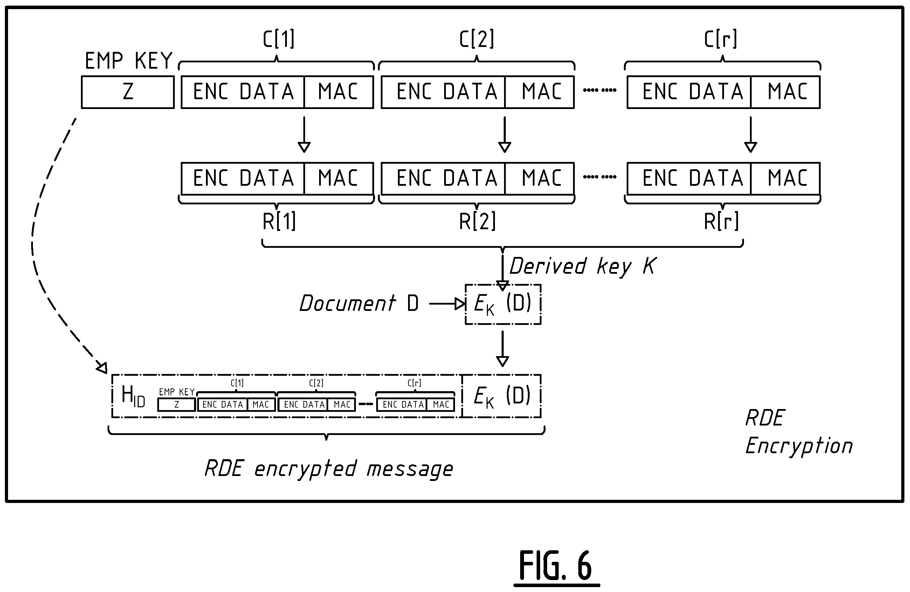

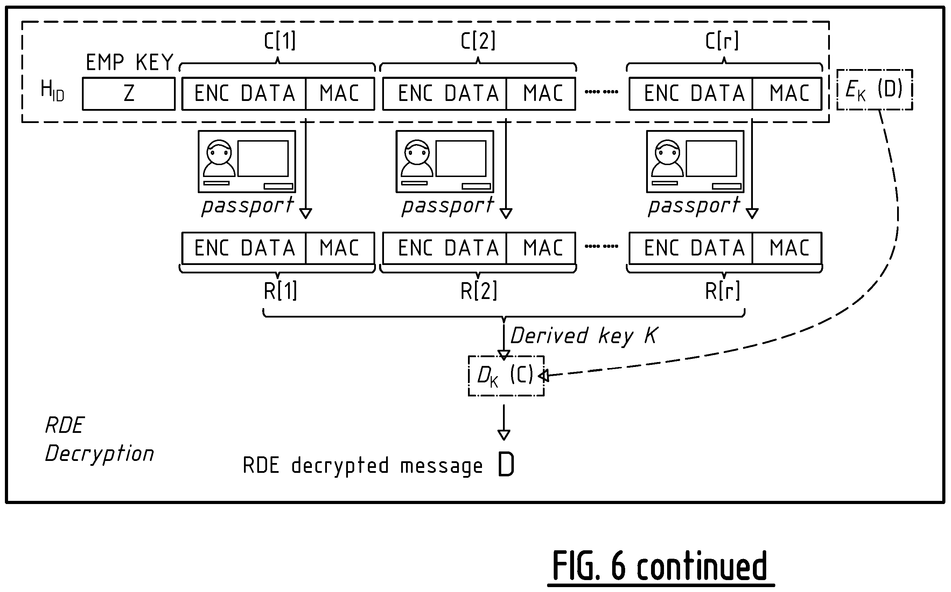

Compare Figure 6 below in which we have colored the payload green and the header red. Each such command C*ᵢ* might have data which needs to be encrypted as C(*i*). As indicated in Figure 5 the MAC is then includes the encrypted data (and the send sequence counter). If we assume that the command (headers) are configured through the header identifier then only the encrypted data and the MACs need to be part of the second component of a basic RDE encrypted message. Finally, the responses to some commands cannot be predicted (i.e. are not deterministic). The simplest example of such command is the GET CHALLENGE command from [11] that returns a number of (pseudo)random bytes. Another example is the Active Authentication command. As indicatee in Section 5 there are benefits in incorporation the Active Authentication command in the RDE header.

### 5 Specification of RDE₂ (two factor RDE)

### 5.1 Description of RDE₂

It is convenient supplementing basic RDE with a knowledge factor called "RDE PIN" (or "RDE Password"). This PIN is then agreed between the holder and the party wanting to use RDE as part of of Step 4 of RDE registration, i.e. Protocol3. The party then somehow incorporates this PIN in the RDE encryption (and decryption) leading to two factor RDE which we denote by RDE2.

This PIN is then agreed between the holder and the party wanting to use RDE as part of of Step 4 of RDE registration, i.e. Protocol 3. The party then uses this PIN to additionally encrypt the elements Z and/or RBs in Step 5 of Protocol 4. In the context of RDE2 two requirements are important:
PIN protection The PIN cannot be deduced from the RDE₂ encrypted data only, i.e. without the passport.

**PIN brute force control** Brute forcing of the PIN with the passport should be controllable, i.e the time to try a PIN guess should be configurable.

As as illustration for the first requirement; additionally AES encrypting the ephemeral key Z with the PIN would not be sound. Indeed, an attacker could find the PIN by looking for a PIN that decrypts the ciphertext to a point in <G>. The second requirement suggests a trade-off between usage speed and speed of brute-forcing the PIN. The simplest, but not very user friendly, way of achieving this consists of choosing a longer PIN length.

### PIN protection

A simple way to achieve PIN protection is to deterministically map the PIN in the group <G> used in the Chip Authentication protocol and then add the embedded PIN to Z. That is, all parties agree upon an embedding I : {0, 1}^{∗} → <G> and the encrypting party sends Z' = I(PIN)+Z instead of Z to the holder in Step 5 of Protocol 4 . As part of the RDE decryption the holder uses his PIN to calculate Z' - I(PIN) and uses this as ephemeral key Z. As Z is a random point so is Z', implying that it holds no information on the PIN. We note that [12] specifies two suitable mappings (generic and integrated). One can also consider the PIN, or a hash thereof, as a big integer and look for a point in <G> with that PIN as its x coordinate. If this fails one add one to the PIN until such a point exists. In commonly used elliptic curves two such points exists corresponding with a y coordinates that are even and odd. By consistently choosing one such point one obtains a deterministic mapping. Many variants of this construction exist.

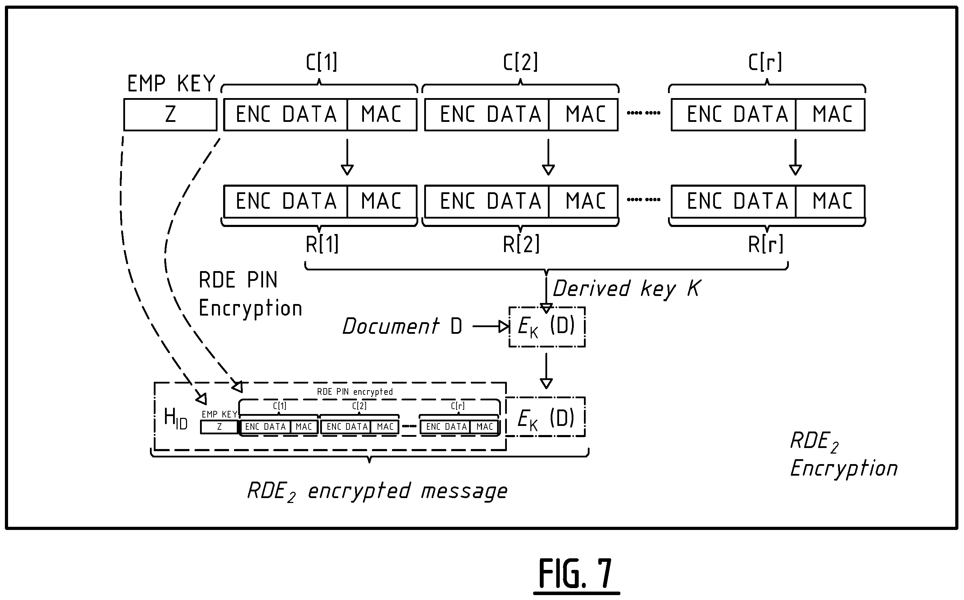

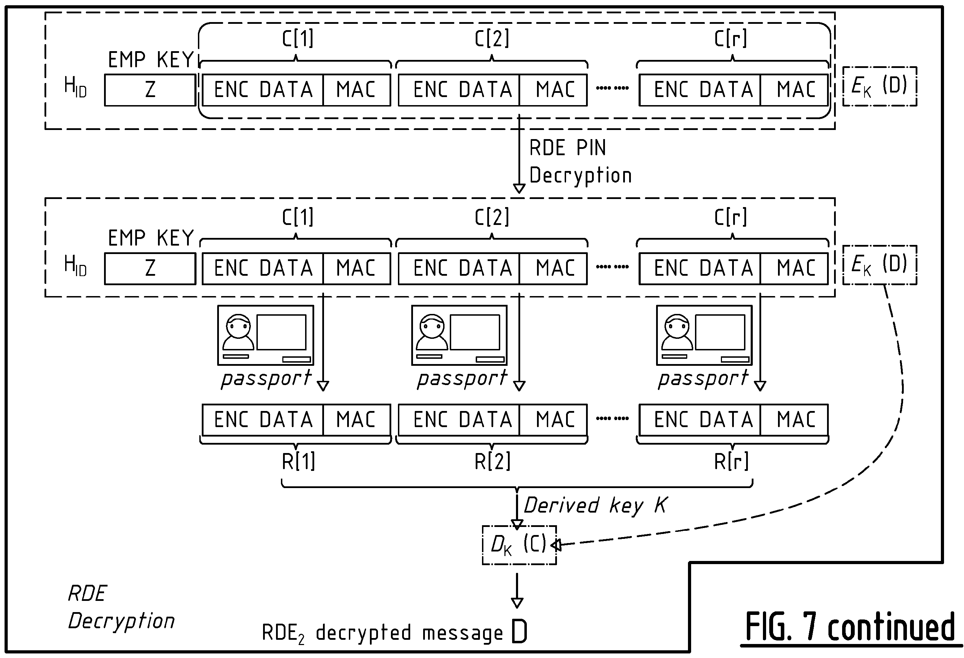

A better way to achieve PIN protection is to leave the ephemeral key Z intact in the basic RDE setup. Let *E* (respectively *M*) be the encrypted data (respectively MACs) of the commands from which the RDE secret is derived from. The party RDE encrypting then encrypts *E* and *M* using the PIN resulting in R and replaces *E, M* in the basic RDE setup with *R.* Compare Figure 7. During RDE decryption the holder of the passports decrypts *R* with the PIN retrieving *E, M* allowing the holder the reconstruct the basic RDE encrypted payload. This payload can then be decrypted using basic RDE decryption. As before it is vital that the PIN can not be derived from *R* by itself. A simple way to achieve this is to represent *E, M* as byte arrays and to concatenate them. As *M* is always a byte array of length eight, one can easily identity *M* from the concatenation. A more structured method would consist of using an identifier on which part of the concatenation constitutes *M.* Next use the PIN to form a byte outputting stream cipher and to encrypt the concatenation of *E, M* by XOR-ing it with the stream cipher output. By performing the same operation on the encrypted output R one arrives at the concatenation of *E, M* from which one can derive *E* and *M* again. Good choices for such a byte outputting stream cipher would be using the AES blockcipher in one of the modes Cipher Feedback (CFB), Output Feedback (OFB) or Counter (CTR). See [26].

### PIN brute force control

An RDE extraction PIN is not a regular one in the sense that a passport does not lock after a number of incorrect PINs are used by the holder. However, an RDE extraction PIN still substantially reduces the risk related to loss of the passport by the legitimate holder. Indeed, with possession of the passport and RDE encrypted data but without the Extraction PIN an adversary would need to brute force the Extraction PIN in *interaction* with the passport. That is, the RDE extraction PIN is bound to the passport which is an important feature. As the passport is required in the brute-force we can predict the time it takes for an adversary to find the PIN. Indeed, suppose that each try takes about 1 second. This implies for instance that the brute force approach has an expected run time of more than 17 years for a 5 digit PIN from an alphabet of 64 characters. Indeed as 645/(2 ^{∗} 3600 ^{∗} 24 ^{∗} 365) ≈ 17. Actually, it seems unlikely that a passport will be able to withstand so many operations without failure.

We estimate the time a RDE extraction PIN takes for the RDE₂ setup indicated above, i.e. using one Read Binary command additionally encrypted with the PIN Here the adversary is forced to setup Basic Access Control, establish Chip Authentication Messaging and to try a Read Binary command. The table below indicates times for each of these steps from which it follows that this takes about 730 milliseconds. We remark that if the adversary wrongly guesses the PIN the Read Binary command will be an incorrect secured message forcing the adversary to start all over again, i.e. starting with Basic Access Control et cetera.

**Table 3: Indications of execution times in milliseconds of passport protocols**

| Basic Access Control | Chip Authentication | READ BINARY | Active Authentication |
|---|---|---|---|
| 210 | 500 | 20 | 200 |

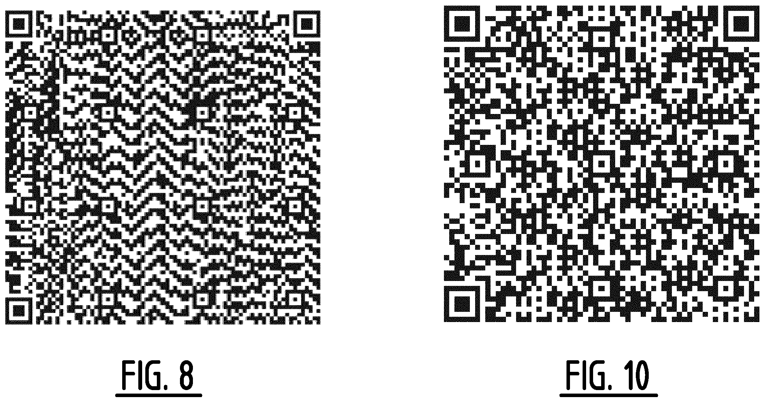

A straightforward way to increase the guessing time is to include more Read Binary commands in RDE₂ whereby only encrypting the last encrypted data and MAC with the PIN using a streamcipher. In this setup the adversary would be forced to first perform all Read Binary commands before being able to guess the PIN. However as a Read Binary only takes 20 milliseconds this would require many additional Read Binary commands in the header of an RDE₂ encrypted message. Indeed, to reach an RDE₂ guessing time of 1000 milliseconds this would require 14 Read Binary commands. This would lead to a header of 41 + 14x8 = 153 bytes. A guessing time of 2 seconds would require 64 Read Binary commands leading to an RDE header of roughly 41 + 64x8 = 553 bytes. The smallest RDE payload is one AES block, i.e. 16 bytes. This implies that a minimal RDE₂ encrypted message with a PIN guessing time of 2 seconds fits in 553+16=569 bytes. This would fit in a QR-code of type version 16, compare https://www. thonky.com/qr-code-tutorial/character-capacities which can hold 586 bytes of information leaving extra bytes for meta-information. In the Figure 8 below we have indicated such version 16 QR code which allows convenient reading with a mobile device, e.g. a smart phone.

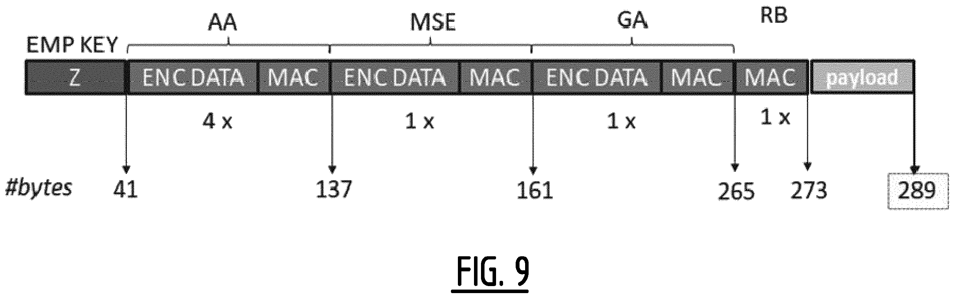

We can lower the number of bytes required in the header of an RDE₂ encrypted message by using more time consuming operations as part of RDE₂. To this end, one could include an extra Chip Authentication operation inside the RDE payload, i.e. setting up a new Chip Authentication from the existing one. The command APDUs for this would then be secured based on the original chip authentication secure messages. This would constitute of two commands (compare [3]): one Manage Security Environment (MSE) and one General Authenticate (GA). The MSE command has data and its secured C-APDU consists of one AES block of encrypted data and a MAC, i.e. consist of 24 bytes of data. The GA command also has data (namely the ephemeral key). In the context of the brainpool320r1 curve this would consist of 6x16 bytes encrypted data and a MAC, i.e. would consist of 104 bytes of data. In total this would constitute of 128 bytes. By using one additional Chip Authentication one would get an an RDE₂ guessing time of 1200 milliseconds and a header of roughly 41 + 128 + 8 = 177 bytes. If one would achieve this by using multiple Read Binary commands this would require 24 protected Read Binary commands leading to a header of 41 + 24x8 = 233 bytes. That is, for higher RDE guessing times it is better to use an additional Chip Authentication. It can also be convenient to include Active Authentications if the passport supports it. We remark that not all (European) passports support Active Authentication but the Dutch passports do. In basic RDE one cannot use Active Authentications as their non-deterministic responses also make the final READ BINARY response non-deterministic. However, by using a new Chip Authentication the secured command and response APDUs are predicable again. Usage of Active Authentications is beneficial as they are relatively more "time consummation" then the setup of a new Chip Authentication. Indeed, a secured Active Authentication consists of one AES block of encrypted data and a MAC, i.e. would consist of 24 bytes of data. So with Active Authentication we get 200/24 = 8,3 milliseconds delay per byte while with Chip Authentication this is 500/177 = 2,8 milliseconds per byte. With READ BINARY this is 20/8 = 2,5 milliseconds per byte. That is, for higher RDE PIN delay times we suggest where the payload consists of an ephemeral key, a number of secured Active Authentications, a setup of a new Chip Authentication and a final READ BINARY command protected with the PIN. For instance, in this setup a delay of 2030 milliseconds can be achieved by using four Active Authentications leading to a header consisting of 41 + 4x24 + 128 + 8 = 273 bytes. That is, a minimal RDE2 message with a PIN guessing time of 2 seconds fits in 289 bytes. Compare Figure 9 below. This would fit in a QR-code of type version 11, compare https://www.thonky.com/qr-code-tutorial/character-capacities which can hold 321 bytes of information leaving extra bytes for meta-information.

In the Figure 10 below we have indicated a version 11 QR code which allows convenient reading with a mobile device, e.g. a smart phone.

### 6 Specification of RDE₃ (two factor RDE authentication)

RDE can also be used as an authentication mechanism. The idea is that the users ability to encrypt or decrypt an RDE message authenticates him. By using the RDE extraction PIN introduced in Section 5 one can transform a passport into a two factor authentication mechanism in the sense of the eIDAS regulation [7] and a mechanism for "strong customer authentication" in the sense of the revised Payment Services Directive [8]. In RDE₃ the user registers with a service provider wanting him to authenticate in an on-line fashion. Similar to Protocol 3 the user registers at this party also agreeing on an RDE extraction PIN.

In Protocol 6 a first, basic specification of RDE₂ is given.

A typical nonce in Step 4 consists of 8-16 bytes which fits in one AES block. As we explained in Section 5 such an RDE encryption fits into a QR code. This means that Step 5 can be performed by presenting an QR code to the user. By supplementing Protocol 6 with common good practices for on-line authentication one can achieve two factor authentication mechanism in the sense of the eIDAS regulation [7] and a mechanism for "strong customer authentication" in the sense of the revised Payment Services Directive [8]. For instance, it better to not let the user return the actual nonce N in Step 6 but only a part of a secure hash value of that. Commonly such a part consists of 6 digits. In Step 7 the service provider then also calculates this hash and verifies if this equal to what was provided by the user. Significant advantages of RDE₃ over Remote Document Authentication discussed in Section 2 is that it is practically possible that the user can manually provide the data proving its identity, i.e. the nonce *N*' consisting of 6 digits. In Remote Document Authentication this data is an ECDSA type of digital signature which consists of at least 64 byte of information.

### Protocol 6 Basic specification of RDE₃

1: The service provider requests a user to authenticate.
2: The user provides a reference to his RDE registration, e.g. provides the document number of the registered passport.
3: The service provider looks up the passport CA public key of the holder, the registered RDE key extraction method and the RDE extraction PIN.
4: The service provider generates a random nonce N, encrypts this using RDE₂, i.e. using the RDE extraction PIN.
5: The service provider sends the RDE₂ encrypted nonce *C* to the user and requests him to reveal the nonce.
6: The user RDE₂ decrypts C, retrieves the nonce *N'* and sends this the service provider.
7: The user service provider checks if *N* = *N'.* If this is the case, the user is authenticated otherwise authentication failed.

In the context "strong customer authentication" in the sense of the revised Payment Services Directive [8] the notion of "dynamic linking" is introduced. This notion encompasses that the user not only authenticates himself to the service provider but also gives consent on a transaction in a way verifiable for the service provider. The idea is that the user for instance approves a transaction of X Euro to a certain beneficiary account number Z. The notion of "dynamic linking" in "strong customer authentication" then means that an adversary cannot modify X or Z without the service provider noticing this.

### Protocol 7 Specification of RDE₃ with dynamic linking

1: The service provider requests a user to authenticate and to approve a transaction.
2: The user provides a reference to his RDE registration, e.g. provides the document number of the registered passport.
3: The service provider looks up the passport CA public key of the holder, the registered RDE key extraction method and the RDE extraction PIN.
4: The service provider generates a random authentication key *K,* encrypts this using RDE₂, i.e. using the RDE extraction PIN.
5: The service provider sends the RDE₂ encrypted key *C* to the user together with the transaction *T* and a random nonce N. The user is request to provide a Message Authentication Code on *T* and *N.*
6: The user RDE₂ decrypts *C,* retrieves the authentication key *K,* forms the Message authentication Code *M* on *T* and *N* and sends this to the service provider.
7: The user service provider calculates the Message Authentication Code on *T* and *N* using *K* and checks if this equal to *M* .If this is the case, the user and the transaction are authenticated, otherwise they failed.

### 7. FURTHER DISCUSSIONS, EXTENSIONS AND VARIATIONS

Again, this protocol can be supplemented with common good practices. The Message Authentication Code could for instance be based on the HMAC algorithm [25] or on the HOTP authentication protocol [13] which is based on HMAC. We note that in Protocol 7 we not really need to encrypt a random authentication key K, i.e. to RDE payload. Indeed, an RDE header already establishes a derived key which suffices. This means that in Step 5 of Protocol 7 only an RDE header needs to be sent and no RDE payload. As in Protocol 6 the Message Authentication Code can be kept small allowing users to manually enter them, e.g. in a web form.

Protocol 7 can conveniently support a similar use case as the Raboscannner of the Dutch Rabobank. Here the user performs internet banking using a webbrowser on his Personal Computer. When the user wants to perform a transaction a figure similar to a QR-code is shown in the browser that needs be scanned using a special device ("Raboscanner"). The figure contains transaction details and a nonce that is presented to the user in the "Raboscanner". If the user consents to the transaction, he then needs to insert a banking card in the device enter a banking PIN after which an approval code is shown. The user needs to type in this approval code in the webbrowser thereby approving the transaction. In the use case supported by 7, the device would be an NFC enable mobile device on which a RDE₃ application (APP) is installed. Moreover, the banking card would be replaced by a passport and the banking PIN would be replaced by the RDE extraction PIN.

In Section 6 we discussed that the required time to brute-force the extraction PIN can be configured. In the context of RDE authentication this is quite convenient as one can limit the time a certain extraction PIN stays valid for authentication. In other words, one can for instance configure that an extraction PIN is valid for a year while the estimated time to brute-force the PIN is two years.

### 7 Further discussions, extensions and variations

According to NIST [28], 128 bit security su ces beyond 2031. To estimate the strength of 160 bit security achievable by passports we use Moore's law. A widely accepted interpretation of this law is that that the computing power one gets for the same amount of money doubles every 18 months. This means that 160 bit security would su ce beyond the year 2079 (=2031 + 32^{∗}1,5). Our results ironically suggest that carrying a passport when traveling abroad might violate export or import laws on cryptography. Compare [20].

In many countries, including the Netherlands, the national identity card is also based on the ICAO specifications [10]. Most notably, the fifth part of these specifications define smartcard sized ("TD1") documents corresponding to typ- ical identity cards. For such national identity cards, RDE is also available if CA is supported. We successfully verified that a Dutch identity card (issued in July 2010) conforms to Proposition 3.1. RDE can also be available on elec- tronic driver licenses conformant to the European regulation 383/2012 of 4 May 2012 [6] and/or standard ISO/IEC 18013 [17] as both have adopted the ICAO CA protocol. Electronic driver licenses are in use in the Netherlands since 14 November 2014. These support the BAC/AA protocol but not the CA protocol implying that RDE is not possible on them. RDE seems not possible on the German eID card *(neue Personalausweis)* [2]. A first reason for this is the switching of the order of CA and TA execution(CA/TA version 2). A terminal first has to successfully conclude the TAv2 protocol, i.e. has to be authenticated, before the CAv1 protocol can start. A more fundamental issue is that unlike in passport CA CAv2 secure messaging is based on a random number generated by the card. This makes it impossible for a party to predict protected responses of the card.

### 8 Conclusion

Based on the Chip Authentication protocol we have demonstrated Remote Document Encryption (RDE) for passports, identity cards and electronic driver li- censes. This allows any party to encrypt data for an electronic document holder such that only with possession of the document these can be decrypted. Possible applications include additional protection of personal data stored in various types of web applications and protection of local storage in mobile applications. Combined with Remote Document Authentication [18] one can e ectively transform a passport into a complete PKI smartcard albeit not PIN protected in the regular sense. To this end we have introduced the notion of Extraction PIN, e ectively providing the same security. We finally remark that RDE encrypted data is lost when the document used is lost. This is particularly relevant as in some countries old identity documents are taken as part of renewal.

### References

1. Bundesamt für Sicherheit in der Informationstechnik (BSI), Advanced Security Mechanisms for Machine Readable Travel Documents, Part 1: eMRTDs with BAC/PACEv2 and EACv1 Technical Guideline TR-03110-3, Version 2.10, 20 March 2012.
2. Bundesamt für Sicherheit in der Informationstechnik (BSI), Advanced Secur- ity Mechanisms for Machine Readable Travel Documents, Part 2: Protocols for electronic IDentification, Authentication and trust Services (eIDAS) Technical Guideline TR-03110-2, Version 2.21, 21 December 2016.
3. Bundesamt für Sicherheit in der Informationstechnik (BSI), Advanced Security Mechanisms for Machine Readable Travel Documents, Part 3: Common Specifications Technical Guideline TR-03110-3, Version 2.10, 20 March 2012.
4. Bundesamt für Sicherheit in der Informationstechnik, Elliptic Curve Cryptography, TR-03111,2012.
5. CardContact Systems, Smart Card Shell and Smart Card Shell Script Collection. Available from www.openscdp.org.
6. European Commission, Laying down technical requirements with regard to driving licences which include a storage medium (microchip), 4 May 2012.
7. European Parliament and the Council of the European Union, Electronic identification and trust services for electronic transactions in the internal market and repealing Directive 1999/93/EC, regulation 910/2014 2014.
8. European Parliament and the Council of the European Union, Directive (EU) 2015/2366 on payment services in the internal market, amending Directives 2002/65/EC, 2009/110/EC and 2013/36/EU and Regulation (EU) No 1093/2010, and repealing Directive 2007/64/EC, 25 november 2015.
9. D. Hankerson, A. Menezes and S. Vanstone, Guide to Elliptic Curve Cryptography, Springer, 2004.
10. ICAO, Doc 2303, Machine Readable Travel Documents, Seventh Edition, 2015. Available from www.icao.int/.
11. ICAO, Doc 2303, Machine Readable Travel Documents, Seventh Edition, part 10: Logical Data Structure (LDS) for Storage of Biometrics and Other Data in the Contactless Integrated Circuit (IC), 2015. Available from www.icao.int/.
12. ICAO, Doc 2303, Machine Readable Travel Documents, Seventh Edition, part 11: security mechanims for MRTDs, 2015. Available from www.icao.int/.
13. IETF, HOTP: An HMAC-Based One-Time Password Algorithm, December 2005.
14. ISO/IEC, 7816-4:2013, Identification cards Integrated circuit cards Part 4: Organization, security and commands for interchange, 2013.
15. ISO/IEC, 9796-2:2010 Information technology Security techniques Digital signature schemes giving message recovery Part 2: Integer factorization based mechanism, 2010.
16. ISO/IEC, 9797-1:2011 Information technology Security techniques Message Authentication Codes (MACs) Part 1: Mechanisms using a block cipher, 2011.
17. ISO/IEC, 18013, Information technology Personal identification ISO-compliant driving licence. Four parts available from www.iso.org.
18. B. Jacobs et al., Beveiligingeisen ten aanzien van identificatie en authenticatie voor toegang zorgconsument tot het Elektronisch Patintendossier (EPD), 2 December 2008. Available from www.cs.ru.nl/B.Jacobs/PAPERS/BLG18295.pdf
19. Jonathan Katz, Yehuda Lindell, Introduction to Modern Cryptography, CRC PRESS, 2008.
20. Bert Jaap Koops, Crypto Law Survey. See www.cryptolaw.org.
21. NIST, FIPS PUB 46-3, Data Encryption Standard (DES), 1999.
22. NIST, FIPS PUB 180-4, Secure Hash Standard (SHS), August 2015.
23. NIST, FIPS PUB 197, Specification for the Advanced Encryption Standard (AES), 2001.
24. NIST, Digital Signature Standard (DSS), FIPS PUB 186-4, July 2013.
25. NIST, The Keyed-Hash Message Authentication Code (HMAC), FIPS PUB 198-1, July 2008.
26. NIST, Recommendation for Block Cipher Modes of Operation, SP 800-38A, December 2001.
27. NIST, Recommendation for Block Cipher Modes of Operation: The CCM Mode for Authentication and Confidentiality, SP 800-38C, May 2004.
28. NIST, Recommendation for Key Management, Part 1: General, Special Publication 800-57, 2016.
29. NIST, Recommendation for Key Derivation Using Pseudorandom Functions, Spe- cial Publication 800-108, 2009.
30. OASIS, (2005), Security Assertion Markup Language (SAML). See www. oasis-open.org.
31. Oostdijk M., van Dijk DJ., Wegdam M., UserCentric Identity Using ePassports, SecureComm 2009, LNICST, volume 19, Springer, Berlin, Heidelberg.

### A RDE experiments

We have tested Proposition 3.1 in practice using the Smart Card Shell and the Smart Card Shell Script Collection [5]. For this we slightly modified the method *generateEphemeralCAKeyPair* in the JavaScript "chipauthentication.js" in the ICAO directory of the collection. The modified method copies the ephemeral key pair (prkCA and pukCA) and reuses this in the next call of the method if a variable *mem* is set to one. We also introduced a modification of the method *readEFwithSFI* JavaScript "eac20.js". The original method keeps reading the elementary file using the READ BINARY command until an error is encountered. This new method, *read128EFwithSFI,* only uses one READ BINARY command reading (maximally) 128 bytes from the file typically without returning an error. In our experiment we used the Smart Card Shell JavaScript code indicated below. We think this script is self-explanatory but for further explanation we refer to [5]. In the script we read data group 14 holding the CA key as suggested after Protocol 3. The MRZ in the script below allows the script to work out-of-the box with the passport simulator in the Smart Card Shell Script Collection.

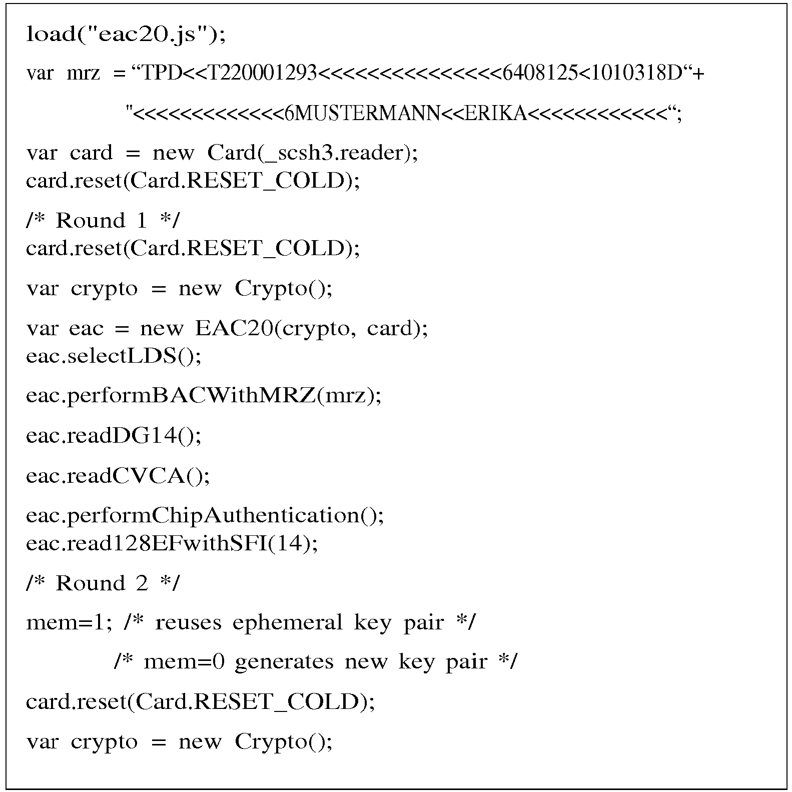

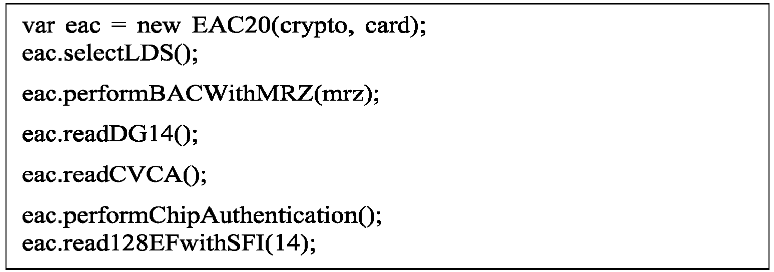

When this script is run in the Smart Card Shell it displays the shared key, the secure messages and the decrypted messages. In Figure 11 we have depicted the shared keys and secure responses of the final call *eac.read128EFwithSFI(14)* in the script. Here the Smart Card Shell simulator was used to simulate an AES- 128 based passport. The left side depicts the two protected responses in the regular situation (*mem* = 0): the shared keys and responses from rounds 1 and 2 are different. The right side corresponds with the RDE setting (*mem* = 1): here the shared keys and protected responses (i.e. M from Proposition 3.1) from rounds 1 and 2 coincide. This behaviour is in line with Proposition 3.1. Similar experiments were done with a simulation of a 3DES based passport. By changing the MRZ in the script we conducted an experiment on an AES-256 based Dutch passport (issued June 2015, CA based on Brainpool320r1/AES-256). We also tested a Dutch identity card (issued July 2010, CA based on Brainpool256r1/3DES). All experiments are consistent with Proposition 3.1.

## Claims

1. A method of providing a user of an electronic identity document with encrypted data, the data being decryptable by said user using the electronic identity document, the method comprising:
- generating an encryption/decryption key for encrypted data transmission between an electronic identity document and a terminal, wherein generating the encryption/decryption key comprises the steps of:
a. a reader of the terminal reading predetermined data from the electronic identity document, said predetermined data including at least a first public key;
b. a processing unit of the terminal validating the authenticity of the data read;
c. the processing unit generating an ephemeral public key;
d. the processing unit generating a session key for secure messaging on the basis of the first public key and the ephemeral public key by:
e. the terminal obtaining at least part of a file from the electronic identity document as a protected response by simulating reading of the electronic identity document according to a command; and
f. generating the encryption/decryption key on the basis of the protected response;
- encrypting the data, by the processing unit of the terminal, using the encryption/ decryption key;
- transmitting the encrypted data to the user of the electronic identity document,
- sending the ephemeral public key and the command to the electronic identity document the electronic identity document providing the encryption/decryption key for decrypting the transmitted
encrypted data, by generating the session key for secure messaging on the basis of the first public key, the ephemeral public key, and the protected response provided by the electronic identity document after receiving the command.

2. The method of claim 1, wherein at least prior to step (e) the electronic identity document and the terminal agree on a set of key extraction parameters, and wherein in step (e) the protected response is read in accordance with the agreed set of key extraction parameters.

3. The method of claim 2, wherein the set of key extraction parameters is agreed upon when the electronic identity document is first read by the reader of the terminal, and wherein the agreed set of key extraction parameters is used for each subsequent data transmission.

4. The method of claim 3, wherein the electronic identity document signals agreement with encrypted data transmission when it is first read by the reader of the terminal.

5. The method of any one of the preceding claims, wherein the protected response forms a cryptogram from which the encryption/decryption key is generated.

6. The method of any one of the preceding claims, further comprising the step of:
f1. deriving an extraction PIN from the key extraction parameters.

7. The method of claim 6, wherein the extraction PIN is used in combination with the encryption/decryption key for encrypting or decrypting data.

8. The method of any one of the preceding claims, wherein at least steps (a)-(e) involve the use of a Chip Authentication (CA) protocol.

9. The method of any one of the preceding claims, wherein at least steps (c) and (d) involve the use of a Diffie-Hellman key exchange protocol.

10. A system for providing transmitting encrypted data to a user of an electronic identity document, the data being decryptable by said user using the electronic identity document, the system comprising means for generating an encryption/decryption key for encryption and decryption of the data, the encryption/decryption key generating means including a processing unit of the terminal and being arranged for causing a reader of the terminal to:
i. read predetermined data from the electronic identity document, said predetermined data including at least a first public key;
j. validate the authenticity of the data read;
k. generate an ephemeral public key;
l. generate a session key for secure messaging on the basis of the first public key and the ephemeral public key by:
m. obtaining at least part of a file from the electronic identity document as a protected response by simulating reading of the electronic identity document according to a command; and
n. generating the encryption/decryption key on the basis of the protected response;
wherein the system is further configured for:
o. encrypting the data using the encryption/decryption key and transmitting the encrypted
data to the user of the electronic identity document; and
p. sending the ephemeral public key and the command to the electronic identity document, the electronic identity document providing the encryption/decryption key for decrypting the transmitted
encrypted data, by generating the session key for secure messaging on the basis of the first public key, the ephemeral public key, and the protected response provided by the electronic identity document after receiving the command.

11. The system of claim 10, wherein the terminal and the electronic identity document are arranged for wireless data transmission.

## Patentansprüche

1. Verfahren, um einen Benutzer eines elektronischen Ausweisdokuments mit verschlüsselten Daten zu versorgen, wobei die Daten durch den Benutzer unter Verwendung des elektronischen Ausweisdokuments entschlüsselbar sind, wobei das Verfahren aufweist:
- Erzeugen eines Verschlüsselungs-/Entschlüsselungsschlüssels für die verschlüsselte Datenübertragung zwischen einem elektronischen Ausweisdokument und einem Endgerät, wobei das Erzeugen des Verschlüsselungs-/Entschlüsselungsschlüssels die folgenden Schritte aufweist:
a. Lesen vorgegebener Daten aus dem elektronischen Ausweisdokument durch ein Lesegerät des Endgeräts, wobei die vorgegebenen Daten wenigstens einen ersten öffentlichen Schlüssel umfassen;
b. Validieren der Authentizität der gelesenen Daten durch eine Verarbeitungseinheit des Endgeräts;
c. Erzeugen eines kurzlebigen öffentlichen Schlüssels durch die Verarbeitungseinheit;
d. Erzeugen eines Sitzungsschlüssels für die sichere Nachrichtenübermittlung auf der Basis des ersten öffentlichen Schlüssels und des kurzlebigen öffentlichen Schlüssels durch die Verarbeitungseinheit durch:
e. Gewinnen wenigstens eines Teils einer Datei aus dem elektronischen Ausweisdokument als eine geschützte Antwort durch das Endgerät, indem das Lesen des elektronischen Ausweisdokuments gemäß einem Befehl simuliert wird; und
f. Erzeugen des Verschlüsselungs-/Entschlüsselungsschlüssels auf der Basis der geschützten Antwort;
- Verschlüsseln der Daten durch die Verarbeitungseinheit des Endgeräts unter Verwendung des Verschlüsselungs-/Entschlüsselungsschlüssels;
- Übertragen der verschlüsselten Daten an den Benutzer des elektronischen Ausweisdokuments,
- Senden des kurzlebigen öffentlichen Schlüssels und des Befehls an das elektronische Ausweisdokument, wobei das elektronische Ausweisdokument den Verschlüsselungs-/Entschlüsselungsschlüssels zum Entschlüsseln der übertragenen verschlüsselten Daten bereitstellt, indem der Sitzungsschlüssel für die sichere Nachrichtenübermittlung auf der Basis des ersten öffentlichen Schlüssels, des kurzlebigen öffentlichen Schlüssels und der geschützten Antwort, die nach dem Empfang des Befehls durch das elektronische Ausweisdokument bereitgestellt wird, erzeugt wird.

2. Verfahren nach Anspruch 1, wobei das elektronische Ausweisdokument und das Endgerät sich wenigstens vor dem Schritt (e) über einen Satz von Schlüsselextraktionsparametern abstimmen, und wobei die geschützte Antwort in Schritt (e) gemäß dem abgestimmten Satz von Schlüsselextraktionsparametern gelesen wird.

3. Verfahren nach Anspruch 2, wobei der Satz von Schlüsselextraktionsparametern abgestimmt wird, wenn das elektronische Ausweisdokument das erste Mal von dem Lesegerät des Endgeräts gelesen wird, und wobei der abgestimmte Satz von Schlüsselextraktionsparametern für jede nachfolgende Datenübertragung verwendet wird.

4. Verfahren nach Anspruch 3, wobei das elektronische Ausweisdokument die Zustimmung zu der verschlüsselten Datenübertragung signalisiert, wenn es das erste Mal von dem Lesegerät des Endgeräts gelesen wird.

5. Verfahren nach einem der vorhergehenden Ansprüche, wobei die geschützte Antwort ein Kryptogramm bildet, aus dem der Verschlüsselungs-/Entschlüsselungsschlüssel erzeugt wird.

6. Verfahren nach einem der vorhergehenden Ansprüche, das ferner den folgenden Schritt aufweist:
f1. Ableiten einer Extraktions-PIN aus den Schlüsselextraktionsparametern.

7. Verfahren nach Anspruch 6, wobei die Extraktions-PIN in Kombination mit dem Verschlüsselungs-/Entschlüsselungsschlüssel zum Verschlüsseln oder Entschlüsseln von Daten verwendet wird.

8. Verfahren nach einem der vorhergehenden Ansprüche, wobei wenigstens die Schritte (a) - (e) die Verwendung eines Chipauthentifizierungs- (CA-) Protokolls mit sich bringen.

9. Verfahren nach einem der vorhergehenden Ansprüche, wobei wenigstens die Schritte (c) und (d) die Verwendung eines Diffie-Hellman-Schlüsselaustauschprotokolls mit sich bringen.

10. System, um die Übertragung verschlüsselter Daten an einen Benutzer eines elektronischen Ausweisdokuments bereitzustellen, wobei die Daten durch den Benutzer unter Verwendung des elektronischen Ausweisdokuments entschlüsselbar sind, wobei das System Einrichtungen zum Erzeugen eines Verschlüsselungs-/Entschlüsselungsschlüssels zur Verschlüsselung und Entschlüsselung der Daten aufweist, wobei die Verschlüsselungs-/Entschlüsselungsschlüssel-Erzeugungseinrichtungen eine Verarbeitungseinheit des Endgeräts umfassen und eingerichtet sind, um zu bewirken, dass ein Lesegerät des Endgeräts:
i. vorgegebene Daten aus dem elektronischen Ausweisdokument liest, wobei die vorgegebenen Daten wenigstens einen ersten öffentlichen Schlüssel umfassen;
j. die Authentizität der gelesenen Daten validiert;
k. einen kurzlebigen öffentlichen Schlüssel erzeugt;
l. einen Sitzungsschlüssel für die sichere Nachrichtenübermittlung auf der Basis des ersten öffentlichen Schlüssels und des kurzlebigen öffentlichen Schlüssels erzeugt durch:
m. Gewinnen wenigstens eines Teils einer Datei aus dem elektronischen Ausweisdokument als eine geschützte Antwort, indem das Lesen des elektronischen Ausweisdokuments gemäß einem Befehl simuliert wird; und
n. Erzeugen des Verschlüsselungs-/Entschlüsselungsschlüssels auf der Basis der geschützten Antwort;
wobei das System ferner konfiguriert ist, um:
o. die Daten unter Verwendung des Verschlüsselungs-/Entschlüsselungsschlüssels zu verschlüsseln und die verschlüsselten Daten an den Benutzer des elektronischen Ausweisdokuments zu übertragen; und
p. den kurzlebigen öffentlichen Schlüssel und den Befehl an das elektronische Ausweisdokument zu senden,
wobei das elektronische Ausweisdokument den Verschlüsselungs-/Entschlüsselungsschlüssel zum Entschlüsseln der übertragenen verschlüsselten Daten bereitstellt, indem der Sitzungsschlüssel für die sichere Nachrichtenübermittlung auf der Basis des ersten öffentlichen Schlüssels, des kurzlebigen öffentlichen Schlüssels und der geschützten Antwort, die nach dem Empfang des Befehls durch das elektronische Ausweisdokument bereitgestellt wird, erzeugt wird.

11. System nach Anspruch 10, wobei das Endgerät und das elektronische Ausweisdokument für die drahtlose Datenübertragung eingerichtet sind.

## Revendications

1. Procédé pour fournir des données chiffrées à un utilisateur d'un document d'identité électronique, les données étant déchiffrables par ledit utilisateur en utilisant ledit document d'identité électronique, le procédé comprenant :
- la génération d'une clé de chiffrement/déchiffrement pour une transmission de données chiffrées entre un document d'identité électronique et un terminal, dans lequel la génération de la clé de chiffrement/déchiffrement comprend les étapes de :
a. par un lecteur du terminal, la lecture de données prédéterminées depuis le document d'identité électronique, lesdites données prédéterminées incluant au moins une première clé publique ;
b. par une unité de traitement du terminal, la validation de l'authenticité des données lues ;
c. par l'unité de traitement, la génération d'une clé publique éphémère ;
d. par l'unité de traitement, la génération d'une clé de session pour une messagerie sécurisée sur la base de la première clé publique et de la clé publique éphémère par :
e. par le terminal, l'obtention d'au moins une partie d'un fichier depuis le document d'identité électronique en tant qu'une réponse protégée par la simulation de la lecture du document d'identité électronique en fonction d'une commande ; et
f. la génération de la clé de chiffrement/déchiffrement sur la base de la réponse protégée ;
- le chiffrement des données, par l'unité de traitement du terminal, en utilisant la clé de chiffrement/déchiffrement ;
- la transmission des données chiffrées à l'utilisateur du document d'identité électronique,
- l'envoi de la clé publique éphémère et de la commande au document d'identité électronique, le document d'identité électronique fournissant la clé de chiffrement/déchiffrement pour le déchiffrement des données chiffrées transmises, par la génération de la clé de session pour une messagerie sécurisée sur la base de la première clé publique, de la clé publique éphémère et de la réponse protégée fournie par le document d'identité électronique après la réception de la commande.

2. Procédé selon la revendication 1, dans lequel, au moins avant l'étape (e), le document d'identité électronique et le terminal conviennent d'un ensemble de paramètres d'extraction de clé, et dans lequel, à l'étape (e), la réponse protégée est lue en fonction de l'ensemble convenu de paramètres d'extraction de clé.

3. Procédé selon la revendication 2, dans lequel l'ensemble de paramètres d'extraction de clé est convenu lorsque le document d'identité électronique est d'abord lu par le lecteur du terminal, et dans lequel l'ensemble convenu de paramètres d'extraction de clé est utilisé pour chaque transmission de données suivante.

4. Procédé selon la revendication 3, dans lequel le document d'identité électronique signale une convention avec une transmission de données chiffrées lorsqu'il est d'abord lu par le lecteur du terminal.

5. Procédé selon l'une quelconque des revendications précédentes, dans lequel la réponse protégée forme un cryptogramme à partir duquel la clé de chiffrement/déchiffrement est générée.

6. Procédé selon l'une quelconque des revendications précédentes, comprenant en outre l'étape de :
f1. la dérivation d'un code secret d'extraction à partir des paramètres d'extraction de clé.

7. Procédé selon la revendication 6, dans lequel le code secret d'extraction est utilisé en combinaison avec la clé de chiffrement/déchiffrement pour chiffrer ou déchiffrer des données.

8. Procédé selon l'une quelconque des revendications précédentes, dans lequel au moins les étapes (a)-(e) impliquent l'utilisation d'un protocole d'authentification de puce (CA).

9. Procédé selon l'une quelconque des revendications précédentes, dans lequel au moins les étapes (c) et (d) impliquent l'utilisation d'un protocole d'échange de clé Diffie-Hellman.

10. Système pour fournir la transmission de données chiffrées à un utilisateur d'un document d'identité électronique, les données étant déchiffrables par ledit utilisateur en utilisant le document d'identité électronique, le système comprenant un moyen pour générer une clé de chiffrement/déchiffrement pour le chiffrement et le déchiffrement des données, le moyen de génération de clé de chiffrement/déchiffrement incluant une unité de traitement du terminal et étant agencé pour amener un lecteur du terminal à :
i. lire des données prédéterminées depuis le document d'identité électronique, lesdites données prédéterminées incluant au moins une première clé publique ;
j. valider l'authenticité des données lues ;
k. générer une clé publique éphémère ;
l. générer une clé de session pour une messagerie sécurisée sur la base de la première clé publique et de la clé publique éphémère par :
m. l'obtention d'au moins une partie d'un fichier depuis le document d'identité électronique en tant qu'une réponse protégée par la simulation de la lecture du document d'identité électronique en fonction d'une commande ; et
n. la génération de la clé de chiffrement/déchiffrement sur la base de la réponse protégée ;
dans lequel le système est en outre configuré pour :
o. le chiffrement des données en utilisant la clé de chiffrement/déchiffrement et la transmission des données chiffrées à l'utilisateur du document d'identité électronique ; et
p. l'envoi de la clé publique éphémère et de la commande au document d'identité électronique,
le document d'identité électronique fournissant la clé de chiffrement/déchiffrement pour le déchiffrement des données chiffrées transmises, par la génération de la clé de session pour une messagerie sécurisée sur la base de la première clé publique, de la clé publique éphémère et de la réponse protégée fournie par le document d'identité électronique après la réception de la commande.

11. Système selon la revendication 10, dans lequel le terminal et le document d'identité électronique sont agencés pour une transmission de données sans fil.
